# EUROPÄISCHE PATENTANMELDUNG

(11) **EP 4 406 768 A1**
(43) Veröffentlichungstag der Anmeldung: **31.07.2024**
(21) Anmeldenummer: 23209325.2
(22) Anmeldetag: 13.11.2023
(51) Int. Cl.: B60K 35/10, B62D 15/02, G01S 5/02, B60W 50/08

(54) **TECHNIK ZUR BEREITSTELLUNG EINER BENUTZERSCHNITTSTELLE FÜR FAHRZEUGINFORMATIONEN UND/ODER ZUR FERNBEDIENUNG EINES (TEIL-)AUTONOM FAHRENDEN KRAFTFAHRZEUGS**

(30) Priorität: 25.11.2022 DE 102022131220
(71) Anmelder: MAN Truck & Bus SE, 80995 München (DE)
(72) Erfinder: Mohra, Holger, 80995 München (DE)
(74) Vertreter: v. Bezold & Partner Patentanwälte - PartG mbB

(57) **Zusammenfassung**

Die Erfindung betrifft ein Verfahren und eine Vorrichtung zur Bereitstellung einer Benutzerschnittstelle zur Anzeige von Fahrzeuginformationen und/oder zur Fernbedienung von Fahrzeugfunktionen eines autonom oder teilautonom fahrenden Kraftfahrzeugs. Das Verfahren umfasst hierbei ein Ermitteln (S1) einer Position einer tragbaren Bedienvorrichtung (10) relativ zum Kraftfahrzeug und ein Bereitstellen und/oder Anpassen (S2), abhängig von der ermittelten Position, einer Benutzerschnittstelle (11) zur Anzeige von Fahrzeuginformationen und/oder zur Fernbedienung von Fahrzeugfunktionen auf der Bedienvorrichtung (10).

## Beschreibung

Die Erfindung betrifft ein Verfahren und eine Vorrichtung zur Bereitstellung einer Benutzerschnittstelle zur Anzeige von Fahrzeuginformationen und/oder zur Fernbedienung von Fahrzeugfunktionen eines autonom oder teilautonom fahrenden Kraftfahrzeugs.

Im Stand der Technik ist es bekannt, eine tragbare Bedienvorrichtung (ein mobiles Gerät), beispielsweise ein Smartphone oder einen Tablet-Computer, derart mit einem Fahrzeug zu koppeln, dass auf einem Bildschirm der tragbaren Bedienvorrichtung Fahrzeuginformationen angezeigt werden. Auf diese Weise kann ein Fahrer des Fahrzeugs beispielsweise über den aktuellen Zustand des Fahrzeugs informiert werden, wenn er sich außerhalb des Fahrzeugs befindet. Derartige Fahrzeuginformationen können beispielsweise ein aktueller Standort des Fahrzeugs oder Informationen über den Zustand von Fahrzeugreifen oder der Fahrzeugbeleuchtung sein.

Ebenso ist es auch bekannt, dass mittels der tragbaren Bedienvorrichtung Fahrzeugfunktionen fernbedient bzw. ferngesteuert werden können. Hierzu wird üblicherweise ein Bedienmenü zur Fernbedienung der Fahrzeugfunktionen an der tragbaren Bedienvorrichtung angezeigt, mittels dessen der Fahrer die Fahrzeugfunktionen von außerhalb des Fahrzeugs bedienen bzw. steuern kann. Derartige Fahrzeugfunktionen können beispielsweise eine Steuerung einer Fahrzeugklimaanlage oder eine Steuerung einer Fahrzeugbeleuchtung sein. Zur Anzeige der Fahrzeuginformationen und/oder zur Fernbedienung der Fahrzeugfunktionen werden dabei üblicherweise Applikationsprogramme, sog. Apps, bzw. entsprechende Anwendungssoftware bereitgestellt, die bei Bedarf auf der tragbaren Bedienvorrichtung installiert werden können.

Da auf der tragbaren Bedienvorrichtung häufig eine große Anzahl von Apps, Fahrzeuginformationen und fernbedienbaren Fahrzeugfunktionen bereitgestellt werden, ist es für einen Fahrer des Fahrzeugs regelmäßig schwierig, die für ihn aktuell bzw. situativ relevante Fahrzeuginformation und/oder das richtige Bedienmenü zur Fernbedienung einer definierten Fahrzeugfunktion rasch zu finden.

Es ist daher Aufgabe der Erfindung, eine Technik zur Unterstützung eines Nutzers eines Kraftfahrzeugs, insbesondere eines Nutzfahrzeugs, bereitzustellen, mittels derer die Suche nach definierten Fahrzeuginformationen und/oder definierten Bedienmenüs zur Fernbedienung von Fahrzeugfunktionen vereinfacht wird.

Die Aufgabe wird gelöst durch die Merkmale der unabhängigen Ansprüche. Vorteilhafte Weiterbildungen sind in den abhängigen Ansprüchen und der Beschreibung angegeben.

Ein erster unabhängiger Aspekt der vorliegenden Offenbarung betrifft ein Verfahren zur Bereitstellung einer Benutzerschnittstelle zur Anzeige von Fahrzeuginformationen und/oder zur Fernbedienung von Fahrzeugfunktionen eines autonom oder teilautonom fahrenden Kraftfahrzeugs. Das Kraftfahrzeug ist somit ein selbstfahrendes Kraftfahrzeug, das fahrerlos betreibbar ist oder bei dem ein Fahrer nur in bestimmten Betriebssituationen die Fahrfunktion übernehmen muss. Bevorzugt ist das Kraftfahrzeug ein autonom oder teilautonom fahrendes Nutzfahrzeug, beispielsweise ein solches Nutzfahrzeug, dessen Betrieb von einem fahrzeugexternen Kontrollzentrum überwacht und/oder gesteuert wird.

Das Verfahren umfasst das Ermitteln einer Position einer tragbaren Bedienvorrichtung relativ zum Kraftfahrzeug. Das Verfahren umfasst ferner das Bereitstellen und/oder Anpassen, abhängig von der ermittelten Position, einer Benutzerschnittstelle zur Anzeige von Fahrzeuginformationen und/oder zur Fernbedienung von Fahrzeugfunktionen auf der Bedienvorrichtung. Beispielsweise kann, abhängig von der ermittelten Position, die Benutzerschnittstelle unterschiedlich konfiguriert werden, und/oder es kann angepasst werden, welche Fahrzeuginformationen und/oder Optionen zur Fernbedienung von Fahrzeugfunktionen, vorzugsweise wie, angezeigt werden. Bei autonomen oder teilautonomen Kraftfahrzeugen ist die Menge und Vielfalt an bereitgestellten Fahrzeuginformationen und Fernbedienungsmöglichkeiten in der Regel besonders groß, sodass das Bereitstellen und Anpassen der Benutzerschnittstelle abhängig von der Position relativ zum Fahrzeug besonders vorteilhaft ist. Der Zugriff auf Fahrzeuginformationen und/oder die Fernbedienung des Kraftfahrzeugs wird verbessert.

Entsprechend kann positionsbezogen relativ zum Kraftfahrzeug und situativ angepasst die Benutzerschnittstelle bereitgestellt und/oder verändert werden. Hierdurch können vorteilhaft einem Nutzer oder einer Bedienperson des autonomen oder teilautonomen Kraftfahrzeugs, der die tragbare Bedienvorrichtung mit sich trägt, abhängig von seiner Position zum Kraftfahrzeug unterschiedliche relevante Fahrzeuginformationen und/oder Bedienmöglichkeiten zur Fernbedienung angezeigt werden.

Die tragbare Bedienvorrichtung (nachfolgend auch kurz als Bedienvorrichtung bezeichnet) kann ein Smartphone oder ein Tablet-Computer oder allgemein ein mobiles Computergerät sein. Die tragbare Bedienvorrichtung kann ferner als eine speziell für das Kraftfahrzeug entwickelte Fahrzeug-Fernbedienung und/oder Fahrzeuginformationseinrichtung ausgebildet sein. Die auf der Bedienvorrichtung bereitgestellte Benutzerschnittstelle kann eine Anzeige und eine Eingabemöglichkeit umfassen. Die Benutzerschnittstelle kann mittels eines berührungsempfindlichen Bildschirms der Bedienvorrichtung bereitgestellt sein, auf dem z. B. Bedienmenüs, Fahrzeuginformationen und Eingabemöglichkeiten für Benutzereingaben angezeigt werden, die abhängig von der ermittelten Position der Bedienvorrichtung relativ zum Kraftfahrzeug angepasst werden.

Das Ermitteln der Position der tragbaren Bedienvorrichtung relativ zum Kraftfahrzeug kann in einer Ausführungsform eine Ermittlung umfassen, in welcher von mehreren vorbestimmten Aufenthaltszonen relativ zum Kraftfahrzeug sich die tragbare Bedienvorrichtung befindet. Die Bereitstellung der Benutzerschnittstelle kann somit abhängig von der Aufenthaltszone konfiguriert und/oder angepasst werden.

Beispielsweise kann, abhängig von der ermittelten Aufenthaltszone, die Benutzerschnittstelle derart bereitgestellt und/oder angepasst werden, dass diejenigen Fahrzeuginformationen und/oder Fernbedienungsoptionen, d. h. Optionen zur Fernbedienung von Fahrzeugfunktionen, die der ermittelten Aufenthaltszone zugeordnet sind, angezeigt werden, vorzugsweise hervorgehoben anzeigt werden, und dass Fernbedienungsoptionen, die der ermittelten Aufenthaltszone nicht zugeordnet sind, unterbunden werden. Für die aktuelle Aufenthaltszone besonders relevante Informationen und Fernbedienungsoptionen können auf diese Weise schnell und priorisiert zur Verfügung gestellt werden. Fernbedienungsoptionen, die z. B. in der jeweiligen Aufenthaltszone nicht sinnvoll oder gewünscht sind, können gezielt unterdrückt werden bzw. nicht zur Verfügung gestellt werden.

Eine hervorgehobene Anzeige kann umfassen, dass die betreffende(n) Fahrzeuginformation(en) und/oder Fernbedienungsoption visuell hervorgehoben dargestellt werden. Dies kann umfassen, dass die Fahrzeuginformationen, Fernbedienungsoptionen und/oder Verweise hierauf mittig, vergrößert und/oder mit einer Markierung versehen auf der Bedienvorrichtung angezeigt werden.

Die mehreren vorbestimmten Aufenthaltszonen können vorzugsweise zumindest eine der folgenden Aufenthaltszonen umfassen: einen Nahbereich des Kraftfahrzeugs, einen Fernbereich des Kraftfahrzeugs und einen Bereich innerhalb des Kraftfahrzeugs. Gemäß dieser Unterteilung der Aufenthaltszonen kann die Konfiguration der Benutzerschnittstelle besonders vorteilhaft situativ an typische Nutzungssituationen des Kraftfahrzeugs angepasst werden.

Der Nahbereich kann beispielhaft durch die Reichweite eines (vom Kraftfahrzeug ausgesendeten) Positionssignals festgelegt sein, anhand dessen die Position der tragbaren Bedienvorrichtung relativ zum Kraftfahrzeug bestimmt wird. Solange somit die Bedienvorrichtung das Positionssignal empfängt, befindet sie sich im Nahbereich. Der Bereich außerhalb der Reichweite des Positionssignals kann dann dem Fernbereich entsprechen. Empfängt die Bedienvorrichtung somit kein Positionssignal, befindet sie sich in dieser Ausführungsvariante im Fernbereich. Der Nahbereich kann auch einem Umgebungsbereich des Kraftfahrzeugs entsprechen, der einen Abstand zum Kraftfahrzeug aufweist, der kleiner als ein erster Schwellenwert ist, z. B. kleiner als x Meter ist. Der Fernbereich kann auch einem Umgebungsbereich des Kraftfahrzeugs entsprechen, der einen Abstand zum Kraftfahrzeug aufweist, der größer als ein zweiter Schwellenwert ist. Der erste und zweite Schwellenwert können gleich sein. Der Bereich innerhalb des Kraftfahrzeugs kann dem Aufenthaltsraum für Passagiere und/oder dem Fahrer entsprechen. Bei einem Nutzfahrzeug mit Fahrerhaus kann dies der Bereich innerhalb des Fahrerhauses sein. Bei einem autonomen Kraftfahrzeug kann das Fahrerhaus auch als Fahrkabine für mindestens eine mitfahrende Person ausgeführt sein und/oder bezeichnet werden.

Gemäß einer weiteren Ausführungsform ist das Kraftfahrzeug ein Nutzfahrzeug mit einem Fahrerhaus. In einer Ausführungsvariante hiervon ist das Nutzfahrzeug ein teilautomatisiertes Kraftfahrzeug, bei dem in bestimmten Situationen eine Übernahme der Fahraufgabe durch einen Fahrer erforderlich ist. Das Verfahren umfasst hierbei den Schritt, dass, falls erkannt wird, z. B. von einem teilautonomen Fahrsystem des Kraftfahrzeugs, dass eine Übernahme der Fahraufgabe durch einen Fahrer bevorsteht, die Benutzerschnittstelle, abhängig von der ermittelten Aufenthaltszone, eine Aufforderung zur Übernahme der Fahraufgabe anzeigt.

In einer Weiterbildung hiervon kann vorgesehen sein, dass abhängig von der ermittelten Aufenthaltszone ein Zeitpunkt und/oder ein angezeigter Inhalt der Aufforderung zur Übernahme der Fahraufgabe angepasst wird. Wie und/oder wann die Aufforderung zur Übernahme der Fahraufgabe und/oder ein Inhalt der angezeigten Aufforderung angezeigt wird, kann somit z. B. abhängig von der ermittelten Aufenthaltszone angepasst werden.

Die mehreren Aufenthaltszonen können hierbei unterschiedliche Teilbereiche innerhalb des Fahrerhauses umfassen. Die unterschiedlichen Teilbereiche können einen - in Vorwärtsfahrtrichtung gesehen - vorderen Bereich und einen hinteren Bereich des Fahrerhauses umfassen. Beispielsweise kann der Zeitpunkt, wann die Aufforderung zur Übernahme der Fahraufgabe angezeigt wird, früher sein, wenn der Fahrer sich im hinteren Teil des Fahrerhauses befindet, im Vergleich zu einem Aufenthalt im vorderen Bereich des Fahrerhauses. Dies ist vorteilhaft, weil der Fahrer, wenn er sich im hinteren Bereich, z. B. im Bett, befindet, mehr Zeit benötigt, bis er in der Lage ist, die Fahraufgabe zu übernehmen. Alternativ oder zusätzlich können die unterschiedlichen Teilbereiche einen - in Vorwärtsfahrtrichtung gesehen - linken (fahrerseitigen) und rechten (beifahrerseitigen) Bereich des Fahrerhauses umfassen. Entsprechend kann hierbei die über die Benutzerschnittstelle ausgegebene Aufforderung zur Übernahme der Fahraufgabe angepasst werden, je nachdem, ob der Fahrer sich auf der Fahrer- oder Beifahrerseite befindet.

In einer weiteren Ausführungsform zeigt die Benutzerschnittstelle eine Bedienmöglichkeit an, um das Kraftfahrzeug von einem Parkzustand in einen autonomen Fahrzustand zu versetzen, falls abhängig von der ermittelten Position bestimmt wird, dass die tragbare Bedienvorrichtung, von einem Fernbereich des Kraftfahrzeugs kommend, einen Nahbereich des Kraftfahrzeugs erreicht und/oder erreicht hat. Vorteilhaft wird die Aktivierung des autonomen Fahrzustands nur ermöglicht, wenn eine die Bedienvorrichtung mit sich führende Bedienperson sich in der Nähe des Kraftfahrzeugs befindet. Der Nahbereich und der Fernbereich können z. B. festgelegt sein, wie es vorstehend beschrieben wurde.

Gemäß einer weiteren Ausführungsform umfasst das Kraftfahrzeug einen verriegelbaren Laderaum, vorzugsweise für Transportgüter. Hierbei zeigt die Benutzerschnittstelle eine Freigabe zur Entladung des Laderaums und/oder eine Bedienmöglichkeit, um den Laderaum zu entriegeln, an, nachdem das Kraftfahrzeug selbstfahrend zu einer Entladestelle, z. B. zu einem Ladekran oder einer Laderampe, navigiert ist und abhängig von der ermittelten Position bestimmt wurde, dass sich die Bedienvorrichtung in einem Nahbereich des Kraftfahrzeugs, vorzugsweise im Nahbereich des Laderaums und/oder einer Entriegelungseinrichtung des Laderaums, befindet.

Ein Vorteil ist, dass die Freigabe zur Entladung und die Entriegelung des Laderaums nur ermöglicht wird, wenn eine die Bedienvorrichtung mit sich führende Bedienperson sich in der Nähe des Kraftfahrzeugs, des Laderaums und/oder der Entriegelungseinrichtung befindet. Die Betriebssicherheit wird hierdurch erhöht. Der Laderaum kann z. B. ein Laderaum eines Lastkraftwagens und/oder ein Frachtcontainer sein.

Die Benutzerschnittstelle kann z. B. eine Möglichkeit zur Entriegelung des Frachtcontainers anzeigen und/oder freigeben, nachdem das Kraftfahrzeug selbstfahrend zu der Entladestelle navigiert ist und abhängig von der ermittelten Position bestimmt wurde, dass sich die Bedienvorrichtung in einem Nahbereich des Kraftfahrzeugs, des Laderaums und/oder der Entriegelungseinrichtung befindet.

Der Laderaum kann ein Laderaum für feste, flüssige oder gasförmige Transportgüter sein. Beispielsweise kann der Laderaum ein Flüssigkeitstank sein. Der Frachtcontainer kann ein See-Container sein. Die von der Benutzerschnittstelle anzeigbare und/oder angezeigte Bedienmöglichkeit, um den Laderaum zu entriegeln, kann z. B. einen Freigabemechanismus bereitstellen, über welchen der Benutzer eine Entladung des im verriegelbaren Laderaum transportierten Transportgutes freigeben, ermöglichen und/oder initiieren kann. Die von der Benutzerschnittstelle anzeigbare und/oder angezeigte Bedienmöglichkeit, um den Laderaum zu entriegeln, kann z. B. im Fall eines See-Containers eine (Fern-)steuerung der Verschlussentriegelung eines See-Containers ermöglichen, die wahlweise abhängig von der ermittelten Position bereitgestellt wird.

Die Art des Laderaums und die Art der Laderaum-Verriegelung können somit von der Art des Transportgutes abhängen. Der Begriff "Laderaum" umfasst somit unterschiedlichste Ausführungsformen des Laderaums. Die Ausgestaltung der Benutzerschnittstelle zur Bereitstellung des Freigabemechanismus kann somit zweckmäßig an die Art des Laderaums, z. B. des Frachtcontainers, und/oder Art des Transportgutes und/oder Art des Verriegelungsmechanismus angepasst sein.

In einer weiteren Ausführungsform ist eine Quer- und Längsführung des Kraftfahrzeugs mittels der Bedienvorrichtung fernsteuerbar. Hierbei ist die Benutzerschnittstelle ausgebildet, eine Fernbedienungsoption zur Fernsteuerung der Quer- und Längsführung des Kraftfahrzeugs anzuzeigen und/oder freizuschalten, solange abhängig von der ermittelten Position bestimmt wird, dass sich die Bedienvorrichtung in einem Nahbereich des Kraftfahrzeugs befindet. Vorteilhaft wird die Betriebssicherheit erhöht, da in der Regel nur im Nahbereich eine Fernbedienung sicher möglich ist, z. B. zur Fernsteuerung des Kraftfahrzeugs auf einer Baustelle oder einem Ladeterminal. Beispielsweise kann das Kraftfahrzeug eine Aktuatorik zum automatisierten Ansteuern aller Fahr-Steuereinrichtungen, z. B. Gas, Bremse, Lenkung, umfassen, die über eine Fernsteuerungs-App fernsteuerbar ist, wobei die Fernsteuerungs-App nur so lange aktiv und nutzbar ist, solange sich die Bedienvorrichtung und damit die Bedienperson in Nahbereich befindet.

Ferner kann die Benutzerschnittstelle hierbei so angepasst werden, dass eine Fernsteuerung eines Vorwärtsfahrbetriebs des Kraftfahrzeugs nur ermöglicht wird, wenn sich die Bedienvorrichtung in einem vorderen oder vorderen seitlichen Nahbereich des Kraftfahrzeugs befindet. Zudem oder alternativ kann eine Fernsteuerung eines Rückwärtsfahrbetriebs des Kraftfahrzeugs nur ermöglicht werden, wenn sich die Bedienvorrichtung in einem hinteren oder hinteren seitlichen Nahbereich des Kraftfahrzeugs befindet. Vorteilhaft wird eine sichere Fernsteuerung eines Vorwärtsfahrbetriebs bzw. eines Rückwärtsfahrbetriebs ermöglicht.

In einer weiteren Ausführungsform ist das Kraftfahrzeug ein elektrisch angetriebenes Kraftfahrzeug (entweder rein elektrisch angetrieben oder zumindest teilweise elektrisch angetrieben). Das Kraftfahrzeug weist eine Ladesteckdose zum externen Aufladen eines Traktionsenergiespeichers auf. Hierbei ist die Benutzerschnittstelle so ausgebildet, dass sie Ladeinformationen einer Ladesäule anzeigt, falls das Kraftfahrzeug zum Laden an einer Ladesäule anhält und anhand der ermittelten Position der Bedienvorrichtung ermittelt wird, dass die Bedienvorrichtung sich in einem vorbestimmten Nahbereich zur Ladesteckdose des Kraftfahrzeugs befindet. Vorteilhaft können situationsangepasst automatisch relevante Ladeinformationen zur Ansicht gebracht werden. Die Benutzerschnittstelle kann mittels einer entsprechenden Lade-App auf der Bedienvorrichtung bereitgestellt werden. Beispielsweise kann sich die Bedienvorrichtung im Nahbereich zur Ladesteckdose befinden, wenn der Abstand der Bedienvorrichtung zur Ladesteckdose kleiner als ein vorbestimmter Wert ist.

In einer weiteren, besonders bevorzugten Ausführungsform wird die Position der tragbaren Bedienvorrichtung relativ zum Kraftfahrzeug unter Verwendung von einer Positionsermittlungseinrichtung ermittelt. Die Positionsermittlungseinrichtung umfasst mindestens eine dem Fahrzeug zugeordnete Sendeeinrichtung, mittels der ein, vorzugsweise als Bluetooth-Signal ausgebildetes, Positionssignal ausgebbar ist, und mindestens eine der Bedienvorrichtung zugeordnete Empfangseinrichtung, mittels der das wenigstens eine Positionssignal empfangbar ist. Hierbei weist die Bedienvorrichtung eine Datenverarbeitungsrichtung auf, mittels der aus dem mindestens einem empfangenen Positionssignal die Position der Bedienvorrichtung relativ zum Kraftfahrzeug ermittelbar ist. Das Positionssignal kann beispielsweise durch ein Funksignal oder durch ein WLAN-Signal und/oder durch ein GPS-Signal gebildet sein. Beispielsweise kann die Position der tragbaren Bedienvorrichtung relativ zum Kraftfahrzeug unter Verwendung von mindestens einem Bluetooth-Beacon (Bluetooth-Funkbake), vorzugsweise von mehreren, verteilt am Kraftfahrzeug angeordneten Bluetooth-Beacons, ermittelt werden. Weiter bevorzugt werden mindestens drei verteilt am Kraftfahrzeug angeordneten Bluetooth-Beacons verwendet.

Bevorzugt ist eine Ausführungsvariante, wie vorstehend bereits erwähnt wurde, bei der das Positions-Signal durch ein Bluetooth-Signal gebildet ist, da mittels diesem die Position der Anzeigeeinrichtung mit besonders hoher Genauigkeit ermittelt werden kann. Zudem ist die Bluetooth-Technologie auch besonders energiesparend, sodass diese für eine Positionsermittlung mit einem mobilen Gerät besonders vorteilhaft ist. Im Folgenden wird nochmals auf die Vorteile moderner Bluetooth-Technologien eingegangen.

Seit der Bluetooth Version 4.0 ist "Bluetooth Low Energy" bzw. "Bluetooth Smart" ein Teil des Bluetooth-Standards. Es ermöglicht eine Basiskommunikation zwischen Bluetooth-Geräten ohne einen vorherigen Kopplungsvorgang. Diese Basiskommunikation ist besonders energiesparend und kann zur Entfernungsbestimmung zwischen Bluetooth-Smart-fähigen Geräten verwendet werden. Die Entfernung eines mobilen Bluetooth-Smart-fähigen Geräts, beispielsweise eines Smartphones oder Tablet-Computers als Bedienvorrichtung, zu einem anderen definierten Objekt, beispielsweise dem Kraftfahrzeug, kann dabei mittels sogenannter "Bluetooth-Beacons" erfolgen, die dem definierten Objekt (hier dem Kraftfahrzeug) zugeordnet sind. Das Bluetooth-Smart-fähige Gerät ist in der Lage, nach diesen Bluetooth-Beacons zu suchen und über die Signalstärke eines Beacon-Signals einen Abstand zwischen dem Bluetooth-Smart-fähigen Gerät und dem Beacon auf wenige Zentimeter genau in einem Bereich von ca. 5 cm bis zu 70 m um das Beacon herum zu bestimmen. Werden mindestens drei Beacons mit überschneidendem Senderadius eingesetzt, kann über Triangulation die Position des Bluetooth-Smart-fähigen Geräts relativ zu den Beacons mit hoher Genauigkeit bestimmt werden.

Vorstehend wurde festgestellt, dass das Kraftfahrzeug ein autonom oder teilautonom fahrendes Nutzfahrzeug sein kann. Es kann sich somit um ein autonom oder teilautonom fahrendes Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Fahrzeug um einen Lastkraftwagen, einen Omnibus und oder einen Sattelzug handeln, der autonom oder teilautonom fahren kann.

Ein zweiter unabhängiger Aspekt der vorliegenden Offenbarung betrifft eine Vorrichtung zur Bereitstellung einer Benutzerschnittstelle zur Anzeige von Fahrzeuginformationen und/oder zur Fernbedienung von Fahrzeugfunktionen eines autonom oder teilautonom fahrenden Kraftfahrzeugs.

Zur Vermeidung von Wiederholungen sollen rein verfahrensgemäß offenbarte Merkmale auch als vorrichtungsgemäß offenbart gelten und beanspruchbar sein. So kann die Vorrichtung dazu ausgebildet sein, ein Verfahren, wie es in diesem Dokument beschrieben ist, auszuführen. Beispielsweise kann die Vorrichtung dazu ausgebildet sein, eine Position einer tragbaren Bedienvorrichtung relativ zum Kraftfahrzeug zu ermitteln und abhängig von der ermittelten Position eine Benutzerschnittstelle zur Anzeige von Fahrzeuginformationen und/oder zur Fernbedienung von Fahrzeugfunktionen auf der Bedienvorrichtung bereitzustellen und/oder anzupassen.

Die Vorrichtung kann z. B. als Applikationsprogramm, sog. App, zur Ausführung auf der tragbaren Bedienvorrichtung, vorzugsweise einem Smartphone und/oder Tabletcomputer, ausgebildet sein. Zudem oder alternativ kann die Vorrichtung, z. B. die App, signalübertragend mit einer Positionsermittlungseinrichtung verbunden sein, mittels der die Position der Bedienvorrichtung relativ zum Fahrzeug ermittelbar ist. Zudem oder alternativ kann die Vorrichtung dazu ausgebildet sein, auf einem Bildschirm der Bedienvorrichtung die Benutzerschnittstelle anzuzeigen.

Die Erfindung betrifft ferner ein Computerprogramm, umfassend Befehle, die bei der Ausführung des Programms durch einen Computer diesen veranlassen, das Verfahren wie hierin beschrieben auszuführen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein Ablaufdiagram zur Illustration des Verfahrens gemäß einer Ausführungsform;
- Figur 2: eine tragbare Bedienvorrichtung in einem Fernbereich relativ zum Kraftfahrzeug;
- Figur 3: ein Blockdiagramm zur Illustration einer Vorrichtung und einer Positionsermittlung gemäß einer Ausführungsform;
- Figur 4: eine tragbare Bedienvorrichtung beim Eintritt in den Nahbereich relativ zum Kraftfahrzeug;
- Figur 5: eine schematische Illustration einer Fernbedienung des Kraftfahrzeugs gemäß einer weiteren Ausführungsform; und
- Figur 6: eine schematische Illustration der Anpassung der Benutzerschnittstelle für unterschiedliche Aufenthaltsbereiche innerhalb des Kraftfahrzeugs gemäß einer Ausführungsform der Erfindung.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

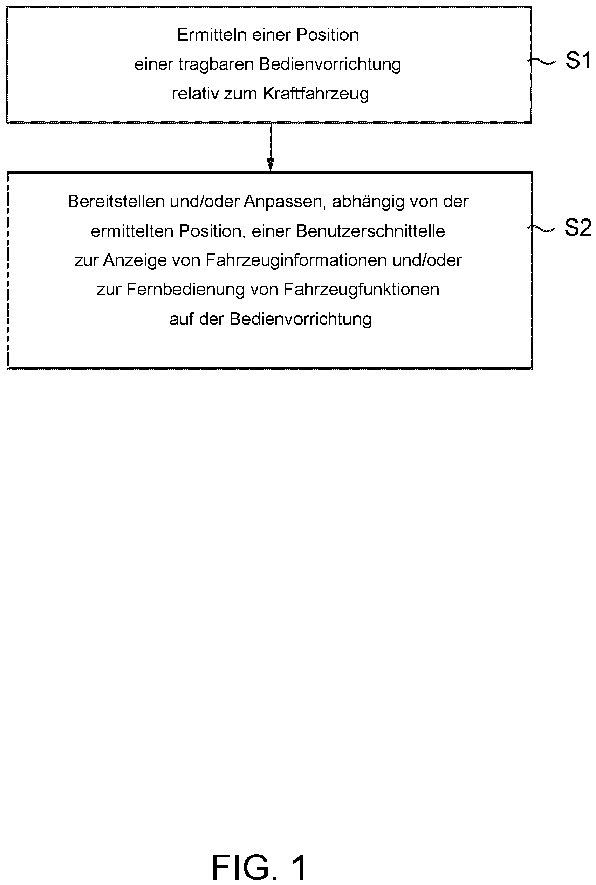

Figur 1 illustriert beispielhaft ein Verfahren zur Bereitstellung einer Benutzerschnittstelle zur Anzeige von Fahrzeuginformationen und/oder zur Fernbedienung von Fahrzeugfunktionen eines autonom oder teilautonom fahrenden Kraftfahrzeugs. Das Verfahren umfasst den Schritt S1 des Ermittelns einer Position einer tragbaren Bedienvorrichtung relativ zum Kraftfahrzeug. Ferner umfasst das Verfahren den Schritt S2 des Bereitstellens und/oder Anpassens, abhängig von der ermittelten Position, einer Benutzerschnittstelle zur Anzeige von Fahrzeuginformationen und/oder zur Fernbedienung von Fahrzeugfunktionen auf der Bedienvorrichtung.

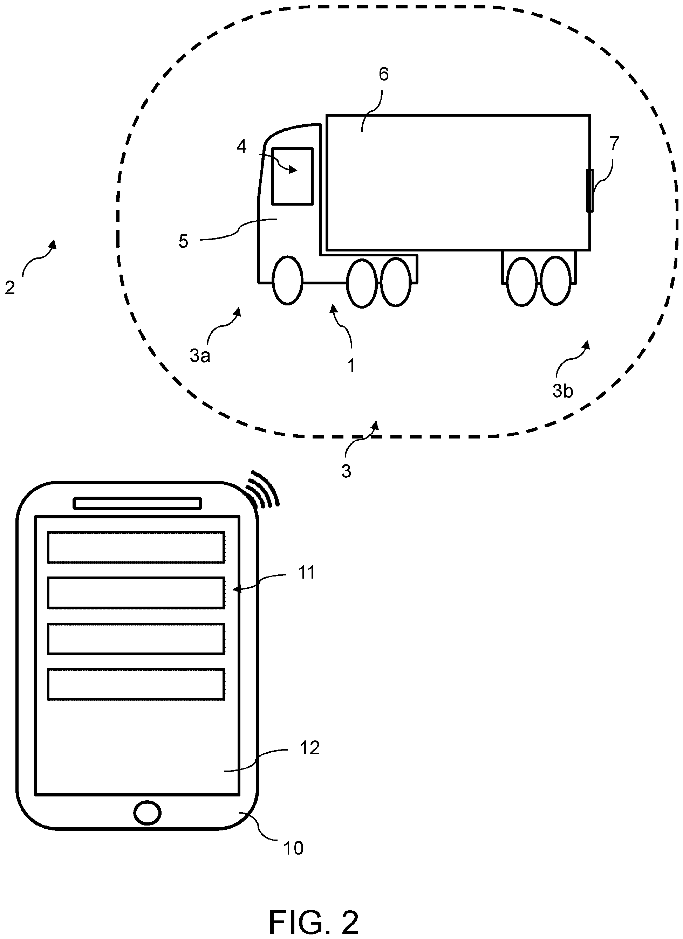

Anhand der Figuren 2 bis 6 werden unterschiedliche Ausführungsbeispiele des Verfahrens illustriert.

Die Figur 2 zeigt rein schematisch ein beispielhaftes Kraftfahrzeug 1 und eine tragbare Bedienvorrichtung 10, mit denen die hierin offenbarten Techniken zur Bereitstellung einer Benutzerschnittstelle zur Anzeige von Fahrzeuginformationen und/oder zur Fernbedienung von Fahrzeugfunktionen verwendbar sind. Das Kraftfahrzeug 1 ist ein autonom oder teilautonom fahrendes Kraftfahrzeug. Das Kraftfahrzeug kann somit zumindest in bestimmten Betriebsphasen selbstständig fahren. Hierzu weist das Kraftfahrzeug ein entsprechendes autonomes oder teilautonomes Fahrsystem auf, das dazu ausgebildet ist, das Fahrzeug im autonomen Fahrbetrieb selbständig (fahrerlos) zu führen. Das Kraftfahrzeug 1 kann ein Nutzfahrzeug, vorzugsweise ein Lastkraftwagen, sein.

Die tragbare Bedienvorrichtung 10 kann ein Smartphone oder ein Tablet-Computer oder allgemein ein mobiles Computergerät sein. Die Bedienvorrichtung 10 umfasst eine Anzeigefläche und eine Eingabeeinrichtung zur Erfassung von Benutzereingaben. Die Anzeigefläche kann als berührungsempfindlicher Bildschirm 12 ausgebildet sein, der gleichzeitig die Eingabeeinrichtung ausbildet.

Die Bedienvorrichtung 10 ist dazu ausgebildet, z. B. mittels einer entsprechenden Software und/oder App, eine Benutzerschnittstelle 11 bereitzustellen. Die Benutzerschnittstelle 11 dient zur Anzeige von Fahrzeuginformationen und/oder zur Fernbedienung von Fahrzeugfunktionen des Kraftfahrzeugs 1. Die Benutzerschnittstelle 11 ist hier stark schematisiert dargestellt und kann z. B. eine grafische Benutzeroberfläche zur Anzeige von Informationen und zur Erfassung von Benutzereingaben umfassen. Die Bedienvorrichtung 10 steht dabei in drahtlosem Signalaustausch mit dem Kraftfahrzeug 1, z. B. um Fahrzeuginformationen zu empfangen und/oder um Steuerbefehle an das Kraftfahrzeug 1 zu übersenden.

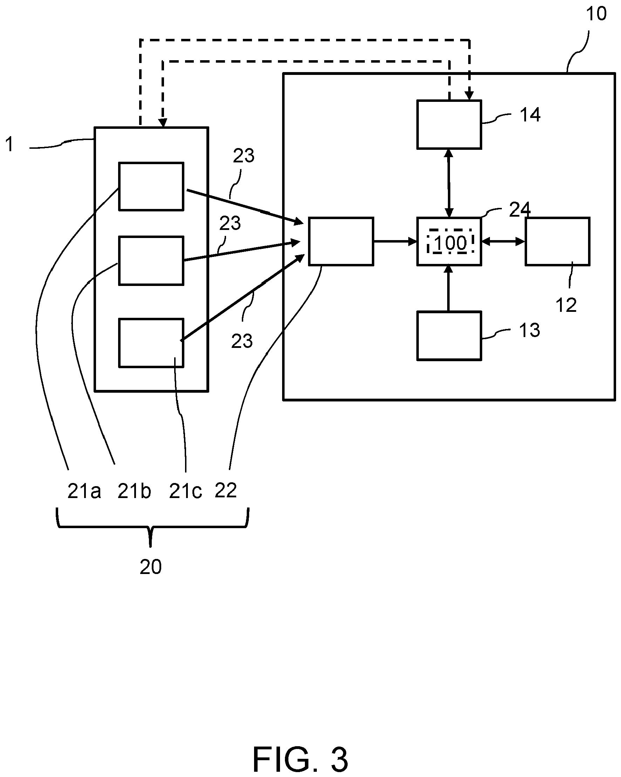

Vorstehend wurde festgestellt, dass im Rahmen des Verfahrens die Position der Bedienvorrichtung 10 relativ zum Kraftfahrzeug 1 ermittelt wird. D. h., es wird ermittelt, wo sich die Bedienvorrichtung 10 in Bezug auf das Kraftfahrzeug 1 befindet. Dies kann unter Verwendung einer Positionsermittlungseinrichtung erfolgen, die die Position der Bedienvorrichtung 10 relativ zum Kraftfahrzeugs ermittelt. Hierbei können z. B. Positionssignale mehrerer Bluetooth-Beacons ausgewertet werden, was nachfolgend noch detaillierter anhand der Figur 3 beschrieben wird.

Abhängig von der ermittelten Position der Bedienvorrichtung 10 relativ zum Kraftfahrzeug wird die auf der Bedienvorrichtung 10 angezeigte Benutzerschnittstelle 11 bereitgestellt und/oder angepasst. Entsprechend kann, abhängig von der ermittelten Position, die Benutzerschnittstelle unterschiedlich konfiguriert werden. Beispielsweise kann, abhängig von der ermittelten Position, angepasst werden, welche Fahrzeuginformationen und/oder Optionen zur Fernbedienung von Fahrzeugfunktionen, vorzugsweise wie, angezeigt werden. Für den Benutzer, der die Bedienvorrichtung 10 mit sich trägt, ändert sich somit, welche Fahrzeuginformationen und/oder Fernbedienungsoptionen ihm über die Benutzerschnittstelle 11 der Bedienvorrichtung 10 angeboten werden und/oder wie ihm die Fahrzeuginformationen und/oder Fernbedienungsoptionen aufbereitet und/oder dargestellt werden.

Ein mögliches Ausführungsbeispiel sieht hierbei vor, dass das Ermitteln der Position der Bedienvorrichtung 10 relativ zum Kraftfahrzeug 1 eine Ermittlung umfasst, in welcher von mehreren vorbestimmten Aufenthaltszonen 2, 3, 4 relativ zum Kraftfahrzeug sich die tragbare Bedienvorrichtung befindet. Die mehreren vorbestimmten Aufenthaltszonen 2, 3, 4 können beispielhaft zumindest eine der folgenden Aufenthaltszonen umfassen: einen Fernbereich 2 des Kraftfahrzeugs 1, einen Nahbereich 3 des Kraftfahrzeugs 1 und einen Bereich 4 innerhalb des Kraftfahrzeugs 1. Die gestrichelte Linie in Figur 2 markiert den Übergang vom Fernbereich 2 zum Nahbereich 3. In der in Figur 2 dargestellten Situation befindet sich die Bedienvorrichtung 10 im Fernbereich 2. Die Bereitstellung der Benutzerschnittstelle 11 wird hierbei abhängig von der aktuellen Aufenthaltszone konfiguriert und/oder angepasst. Vorliegend zeigt die Benutzerschnittstelle 11 diejenigen Fahrzeuginformationen und/oder Fernbedienungsoptionen, die der ermittelten Aufenthaltszone, z. B. hier der Fernbereichs-Zone 2, zugeordnet sind.

Für die aktuelle Aufenthaltszone besonders relevante Informationen und Fernbedienungsoptionen können auf diese Weise schnell und priorisiert zur Verfügung gestellt werden. Fernbedienungsoptionen, die z. B. in der jeweiligen Aufenthaltszone nicht sinnvoll oder gewünscht sind, können gezielt unterdrückt werden bzw. nicht zur Verfügung gestellt werden. Z. B. können aus Sicherheitsgründen Fernbedienungsoptionen zur Fernsteuerung eines Fahrbetriebs des Kraftfahrzeugs unterbunden werden, solange sich die Bedienvorrichtung 2 in der Fernbereichs-Zone 2 befindet.

Figur 3 zeigt ein Blockdiagramm zur Illustration einer Vorrichtung und einer Positionsermittlung gemäß einer Ausführungsform. Die Ermittlung der Position der tragbaren Bedienvorrichtung 10 relativ zum Kraftfahrzeug erfolgt mittels einer Positionsermittlungseinrichtung 20. Die Positionsermittlungseinrichtung 20 umfasst mindestens eine dem Fahrzeug zugeordnete Sendeeinrichtung 21a, 21b, 21c, mittels der ein Positionssignal 23 ausgebbar ist. Die Positionsermittlungseinrichtung umfasst mindestens eine der Bedienvorrichtung zugeordnete Empfangseinrichtung 22, mittels der das wenigstens eine Positionssignal 23 empfangbar ist.

In Figur 3 weist die Positionsermittlungseinrichtung 20 hier beispielhaft drei dem Kraftfahrzeug 1 zugeordnete Sendeeinrichtungen 21a, 21b, 21c auf, mittels derer Positionssignale ausgegeben werden können. Die Sendeeinrichtungen 21a, 21b, 21c sind hier beispielhaft als sogenannte Bluetooth-Beacons ausgebildet, mittels derer ein als Bluetooth-Signal ausgebildetes Positionssignal ausgegeben wird. Zudem weist die Positionsermittlungseinrichtung 20 auch eine dem mobilen Gerät 3 zugeordnete Datenverarbeitungseinrichtung 24 auf. Die Datenverarbeitungseinrichtung 24 empfängt eingangsseitig von der Empfangseinrichtung 22 die empfangenen Positionssignale 23 oder Informationen hierüber. Aus den empfangenen Positionssignalen oder den Informationen hierüber kann die Datenverarbeitungseinrichtung 24 die Position der Bedienvorrichtung 10 relativ zu dem Kraftfahrzeug 1, z. B. über eine Triangulation basierend auf den Positionssignalen 23, ermitteln. Diese Funktion der Datenverarbeitungseinrichtung 24 kann auch der Positionsermittlungseinrichtung 20 zugeordnet werden.

Die Datenverarbeitungseinrichtung 24 ist hier beispielhaft auch derart signaltechnisch mit dem Bildschirm 12 der Bedienvorrichtung 10 verbunden, dass mittels der Datenverarbeitungseinrichtung 24 die Anzeige des Bildschirms 12 gesteuert bzw. geregelt werden kann. Die Bedienvorrichtung 10 kann ferner eine Eingabeeinrichtung 13 zur Erfassung von Benutzereingaben umfassen, die ebenfalls signaltechnisch mit der Datenverarbeitungseinrichtung 24 verbunden ist. Die Eingabeeinrichtung 13 kann Eingabetaster und/oder eine berührungsempfindliche Oberfläche des Bildschirms 12 zur Erfassung von Touch-Eingaben umfassen.

Des Weiteren ist die Datenverarbeitungseinrichtung 24 hier beispielhaft auch signaltechnisch mit einer der Bedienvorrichtung 10 zugeordneten Sende- und Empfangseinrichtung 14 verbunden. Mittels der Sende- und Empfangseinrichtung 14 werden die mittels der Bedienvorrichtung 10 anzeigbaren Fahrzeuginformationen von dem Kraftfahrzeug 1 an die Bedienvorrichtung 10 übermittelt. Zudem werden mittels der Sende- und Empfangseinrichtung 14 auch Befehle zur Fernbedienung von Fahrzeugfunktionen von der Bedienvorrichtung 10 an das Kraftfahrzeug 1 übermittelt.

Die Datenverarbeitungseinrichtung 24 kann somit eine Vorrichtung 100 zur Bereitstellung der Benutzerschnittstelle zur Anzeige von Fahrzeuginformationen und/oder zur Fernbedienung von Fahrzeugfunktionen eines autonom oder teilautonom fahrenden Kraftfahrzeugs 1 ausbilden und dazu ausgebildet sein, abhängig von der ermittelten Position eine Benutzerschnittstelle zur Anzeige von Fahrzeuginformationen und/oder zur Fernbedienung von Fahrzeugfunktionen auf der Bedienvorrichtung, insbesondere deren Bildschirm 12, bereitzustellen.

Die Vorrichtung 100 kann z. B. mittels eines Applikationsprogramms, einer sog. App, programmtechnisch eingerichtet sein, das Verfahren, wie hierin beschrieben, auf der tragbaren Bedienvorrichtung 10, z. B. einem Smartphone und/oder Tablet-Computer, auszuführen.

Im Folgenden werden weitere Beispiele dafür erläutert, welche Fahrzeuginformationen und Bedienmenüs in Abhängigkeit von der ermittelten Position der Bedienvorrichtung 10 an dem Bildschirm 12 der Bedienvorrichtung 10 angezeigt werden.

Sofern sich die Bedienvorrichtung 10, wie es in Fig. 2 gezeigt ist, außerhalb der Reichweite der Positionssignale bzw. im Fernbereich 2 befindet und somit die Positionssignale nicht empfängt, werden hier beispielhaft dem Nutzer der Bedienvorrichtung 10 über die Benutzerschnittstelle 22 dem Fernbereich 2 zugeordnete Fahrzeuginformationen und Fernbedienoptionen bereitgestellt. Diese können beispielhaft allgemeine Fahrzeuginformationen, die aktuellen Luftdrücke von Fahrzeugreifen und/oder der Füllstand eines Traktionsenergiespeichers des Kraftfahrzeugs 1 (Tankfüllstand oder Ladezustand einer Traktionsbatterie) umfassen. Zudem kann z. B. dann auch ein Bedienmenü zur Regelung bzw. Steuerung einer Fahrzeugheizung bzw. einer Fahrzeugklimaanlage an dem Bildschirm 12 angezeigt werden.

In einer möglichen Ausführungsvariante kann der Nahbereich 3 beispielhaft durch die Reichweite der (vom Kraftfahrzeug ausgesendeten) Positionssignale 23 festgelegt sein, anhand derer die Position der Bedienvorrichtung 10 relativ zum Kraftfahrzeug 1 bestimmt wird. Solange somit die Bedienvorrichtung, insbesondere die Empfangseinrichtung 22, das Positionssignal empfängt, befindet sich die Bedienvorrichtung 10 im Nahbereich 3. Der Bereich außerhalb der Reichweite der Positionssignale kann dann dem Fernbereich 2 entsprechen. Empfängt die Bedienvorrichtung, d. h. insbesondere die Empfangseinrichtung 22, somit kein Positionssignal 23, befindet sie sich in dieser Ausführungsvariante im Fernbereich 2. Der Nahbereich kann auch einem Umgebungsbereich des Kraftfahrzeugs entsprechen, der einen Abstand zum Kraftfahrzeug aufweist, der kleiner als ein erster Schwellenwert ist, z. B. kleiner als x Meter ist. Der Fernbereich kann auch einem Umgebungsbereich des Kraftfahrzeugs entsprechen, der einen Abstand zum Kraftfahrzeug aufweist, der größer als dieser Schwellenwert ist.

Die vorgegebenen Aufenthaltszonen können auch einen Bereich 4 innerhalb des Kraftfahrzeugs 1 umfassen. D. h., es kann bestimmt werden, ob sich die Bedienvorrichtung 10 innerhalb des Kraftfahrzeugs befindet. Im Beispiel des dargestellten Nutzfahrzeugs mit einem Fahrerhaus 5 entspricht dies dem Bereich innerhalb des Fahrerhauses 5.

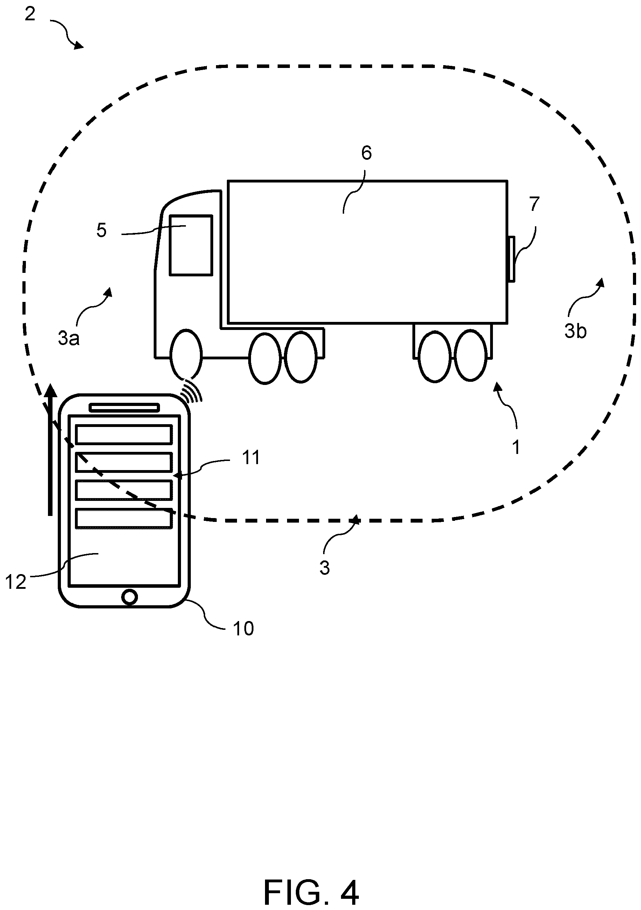

Sofern sich die Bedienvorrichtung 10, wie in Figur 4 illustriert, von einem Fernbereich 2 außerhalb der Reichweite der Positionssignale in den Nahbereich 3, d. h. in einen Bereich innerhalb der Reichweite der Positionssignale, bewegt, wird die bereitgestellte Benutzerschnittstelle 11 angepasst, d. h., es wird geändert, was und wie dem Benutzer über den Bildschirm 12 an Fahrzeuginformationen und/oder zur Fernbedienung von Fahrzeugfunktionen angezeigt wird.

Beispielsweise zeigt die Benutzerschnittstelle 11 eine Bedienmöglichkeit an, um das im Parkmodus abgestellte autonome Kraftfahrzeug 1 von einem Parkzustand in einen autonomen Fahrzustand zu versetzen, falls sich ein Bediener mit der Bedienvorrichtung 10 (z. B. einem Smartphone nähert) und abhängig von der ermittelten Position bestimmt wird, dass die Bedienvorrichtung 10, von einem Fernbereich 2 des Kraftfahrzeugs kommend, einen Nahbereich 3 des Kraftfahrzeugs erreicht und/oder erreicht hat. Bei Erreichen des Nahbereichs 3 zeigt z. B. eine App auf der Bedienvorrichtung 10 die Möglichkeit an, das Kraftfahrzeug 1 in einen autonomen Fahrzustand zu versetzen. Dies erfolgt dann bei entsprechender Eingabe über die App und kann über eine optische Rückmeldung in der App und seitens des Kraftfahrzeugs 1 (z. B. mittels Lichtindikation) signalisiert werden.

Auf diese Weise kann sichergestellt werden, dass die Aktivierung des autonomen Fahrzustands nur ermöglicht wird, wenn eine die Bedienvorrichtung 20 mit sich führende Bedienperson sich in der Nähe des Kraftfahrzeugs 1 befindet.

In einem weiteren Ausführungsbespiel umfasst das Kraftfahrzeug 1 einen verriegelbaren Laderaum 6, vorzugsweise für Transportgüter, der über eine fernsteuerbare Verriegelungseinrichtung 7 wahlweise ver- und entriegelt werden kann. Hierbei zeigt die Benutzerschnittstelle 11 eine Freigabe zur Entladung des Laderaums und/oder eine Bedienmöglichkeit, um den Laderaum zu entriegeln, an, nachdem das Kraftfahrzeug 1 selbstfahrend zu einer Entladestelle, z. B. zu einem Ladekran oder einer Laderampe, navigiert ist und abhängig von der ermittelten Position bestimmt wurde, dass sich die Bedienvorrichtung 10 in einem Nahbereich 2 des Kraftfahrzeugs, vorzugsweise im Nahbereich des Laderaums 6 und/oder der Entriegelungseinrichtung 7 des Laderaums, befindet.

Beispielsweise kann die Bedienmöglichkeit der Verriegelungseinrichtung 7 über die Benutzerschnittstelle 11 nur freigeschaltet werden, wenn anhand eines Positionssignals 23 ermittelt wird, dass sich die Bedienvorrichtung 10 weniger als X Meter von der Entriegelungseinrichtung entfernt befindet, wobei X als Wert vorgegeben sein kann. Ein Vorteil ist, dass die Freigabe zur Entladung und die Entriegelung des Laderaums nur ermöglicht werden, wenn eine die Bedienvorrichtung 10 mit sich führende Bedienperson sich in der Nähe des Kraftfahrzeugs 1, des Laderaums 6 und/oder der Entriegelungseinrichtung 7 befindet. Die Betriebssicherheit wird hierdurch erhöht. Der Laderaum kann z. B. ein Laderaum eines Lastkraftwagens und/oder ein Frachtcontainer sein.

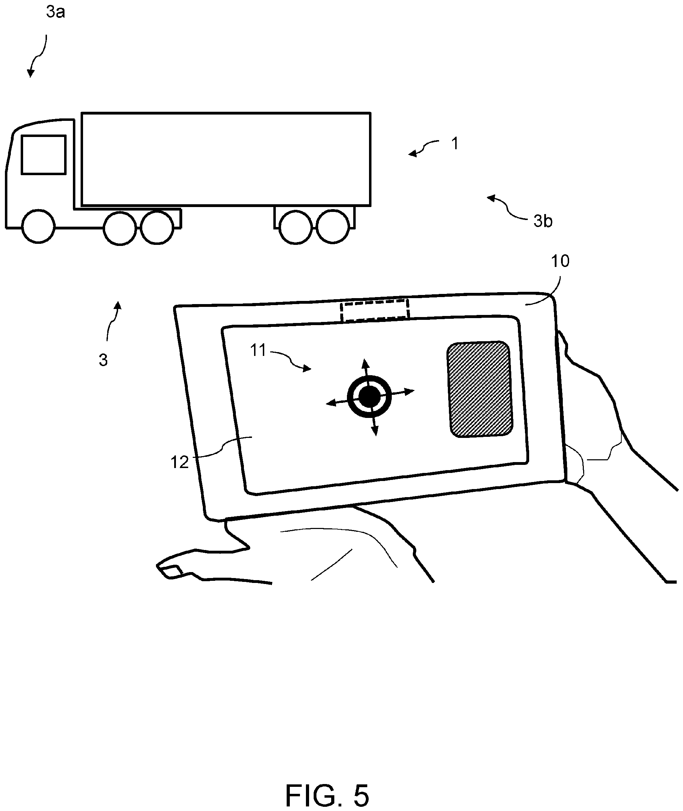

Figur 5 illustriert ein weiteres Ausführungsbeispiel. Hierbei ist eine Quer- und Längsführung des Kraftfahrzeugs mittels der Bedienvorrichtung 10 fernsteuerbar. Hierbei ist die Benutzerschnittstelle 11 ausgebildet, eine Fernbedienungsoption zur Fernsteuerung der Quer- und Längsführung des Kraftfahrzeugs anzuzeigen und/oder freizuschalten, solange abhängig von der ermittelten Position bestimmt wird, dass sich die Bedienvorrichtung 10 in einem Nahbereich 3 des Kraftfahrzeugs 1 befindet. Vorteilhaft wird die Betriebssicherheit erhöht, da in der Regel nur im Nahbereich eine Fernbedienung sicher möglich ist, z. B. zur Fernsteuerung des Kraftfahrzeugs auf einer Baustelle oder im Bereich eines Ladeterminals. Beispielsweise kann das Kraftfahrzeug 1 eine Aktuatorik zum automatisierten Ansteuern aller Fahr-Steuereinrichtungen, z. B. Gas, Bremse, Lenkung, umfassen, die über eine Fernsteuerungs-App, die auf der Bedienvorrichtung 10 installiert ist, fernsteuerbar ist, wobei die Fernsteuerungs-App nur so lange aktiv und nutzbar ist, solange sich die Bedienvorrichtung und damit die Bedienperson innerhalb des Nahbereichs 3 befindet.

Ferner kann die Benutzerschnittstelle 11 hierbei so angepasst werden, dass eine Fernsteuerung eines Vorwärtsfahrbetriebs des Kraftfahrzeugs 1 nur ermöglicht wird, wenn sich die Bedienvorrichtung 10 in einem vorderen oder vorderen seitlichen Nahbereich 3a des Kraftfahrzeugs 1 befindet. Zudem oder alternativ kann eine Fernsteuerung eines Rückwärtsfahrbetriebs des Kraftfahrzeugs nur ermöglicht, d. h. freigeschaltet sein, wenn sich die Bedienvorrichtung 10 in einem hinteren oder hinteren seitlichen Nahbereich 3b des Kraftfahrzeugs 1 befindet. Vorteilhaft wird eine sichere Fernsteuerung eines Vorwärtsfahrbetriebs bzw. eines Rückwärtsfahrbetriebs ermöglicht. Figur 5 soll eine Situation illustrieren, in der sich die Bedienvorrichtung in einem hinteren seitlichen Bereich des Kraftfahrzeugs befindet, in dem eine Fernsteuerung eines Rückwärtsfahrbetriebs über die Benutzerschnittstelle freigeschaltet ist.

Gemäß einem weiteren, nicht dargestellten Ausführungsbeispiel ist das Kraftfahrzeug 1 ein elektrisch angetriebenes Kraftfahrzeug (entweder rein elektrisch angetrieben oder zumindest teilweise elektrisch angetrieben). Das Kraftfahrzeug weist eine Ladesteckdose zum externen Aufladen eines Traktionsenergiespeichers auf. Hierbei ist die Benutzerschnittstelle 11 so ausgebildet, dass sie Ladeinformationen einer Ladesäule anzeigt, falls das Kraftfahrzeug zum Laden an einer Ladesäule anhält und anhand der ermittelten Position der Bedienvorrichtung ermittelt wird, dass die Bedienvorrichtung 10 sich in einem vorbestimmten Nahbereich zur Ladesteckdose des Kraftfahrzeugs befindet.

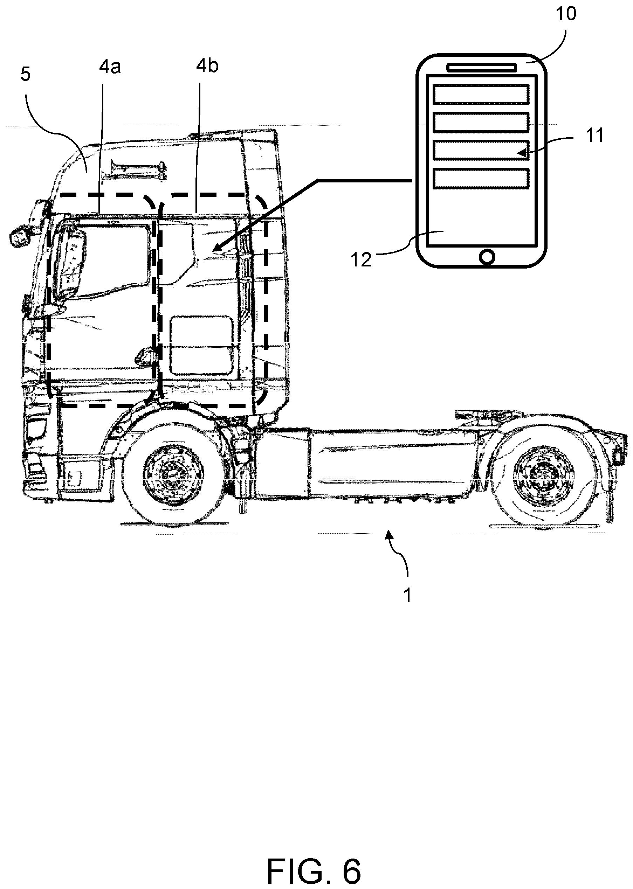

Figur 6 illustriert ein Ausführungsbeispiel, bei dem das Ermitteln der Position der Bedienvorrichtung 10 relativ zum Kraftfahrzeug 1 eine Ermittlung umfasst, in welcher von mehreren vorbestimmten Aufenthaltszonen innerhalb des Kraftfahrzeugs 1 sich die tragbare Bedienvorrichtung 10 befindet. Im Beispiel der Figur 6 können die mehreren Aufenthaltszonen hierbei unterschiedliche Teilbereiche innerhalb des Fahrerhauses 5 umfassen, nämlich einen in Fahrtrichtung gesehen vorderen Bereich 4a und einen hinteren Bereich 4b.

Ferner kann vorgesehen sein, dass das Nutzfahrzeug ein teilautomatisiertes Kraftfahrzeug ist, bei dem in bestimmten Situationen eine Übernahme der Fahraufgabe durch einen Fahrer erforderlich ist. Das Verfahren umfasst hierbei den Schritt, dass, falls erkannt wird, z. B. von einem teilautonomen Fahrsystem des Kraftfahrzeugs, dass eine Übernahme der Fahraufgabe durch einen Fahrer bevorsteht, die Benutzerschnittstelle, abhängig von der ermittelten Aufenthaltszone, eine Aufforderung zur Übernahme der Fahraufgabe anzeigt. Beispielweise ist es möglich, dass abhängig von der ermittelten Aufenthaltszone 4a, 4b ein Zeitpunkt und/oder ein angezeigter Inhalt der Aufforderung zur Übernahme der Fahraufgabe angepasst wird. Beispielsweise kann der Zeitpunkt, wann die Aufforderung zur Übernahme der Fahraufgabe angezeigt wird, früher sein, wenn der Fahrer sich im hinteren Teil 4b des Fahrerhauses 5 befindet, im Vergleich zu einem Aufenthalt im vorderen Bereich 4a des Fahrerhauses 5. Dies ist vorteilhaft, weil der Fahrer, wenn er sich im hinteren Bereich 4b befindet, mehr Zeit benötigt, bis er in der Lage ist, die Fahraufgabe zu übernehmen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Kraftfahrzeug
- 2: Fernbereich
- 3: Nahbereich
- 4: Innenbereich
- 4a: Cockpitbereich
- 4b: Schlaf-/Wohnbereich
- 5: Fahrerhaus
- 6: Laderaum
- 7: Verriegelung
- 10: Tragbare Bedienvorrichtung, z.B. Smartphone oder Tablet-Computer
- 11: Benutzerschnittstelle
- 12: Anzeigefläche, Bildschirm
- 13: Eingabeeinrichtung
- 14: Sende- und Empfangseinrichtung
- 20: Positionsermittlungseinrichtung
- 21a, 21b, 21c: Sendeeinrichtung, z. B. Bluetooth-Beacon
- 22: Empfangseinrichtung
- 23: Positionssignal
- 24: Datenverarbeitungseinrichtung
- 100: Vorrichtung

## Patentansprüche

1. Verfahren zur Bereitstellung einer Benutzerschnittstelle zur Anzeige von Fahrzeuginformationen und/oder zur Fernbedienung von Fahrzeugfunktionen eines autonom oder teilautonom fahrenden Kraftfahrzeugs (1), aufweisend:
Ermitteln (S1) einer Position einer tragbaren Bedienvorrichtung (10) relativ zum Kraftfahrzeug, und
Bereitstellen und/oder Anpassen (S2), abhängig von der ermittelten Position, einer Benutzerschnittstelle (11) zur Anzeige von Fahrzeuginformationen und/oder zur Fernbedienung von Fahrzeugfunktionen auf der Bedienvorrichtung (10).

2. Verfahren nach Verfahren nach Anspruch 1, wobei:
das Ermitteln (S1) der Position der tragbaren Bedienvorrichtung relativ zum Kraftfahrzeug eine Ermittlung umfasst, in welcher von mehreren vorbestimmten Aufenthaltszonen (2, 3, 4) relativ zum Kraftfahrzeug sich die tragbare Bedienvorrichtung befindet; und
die mehreren vorbestimmten Aufenthaltszonen (2, 3, 4) zumindest eine der folgenden Aufenthaltszonen umfassen: einen Nahbereich (3) des Kraftfahrzeugs, einen Fernbereich (2) des Kraftfahrzeugs und einen Bereich (4) innerhalb des Kraftfahrzeugs.

3. Verfahren nach Anspruch 2, wobei:
abhängig von der ermittelten Aufenthaltszone (2, 3, 4) die Benutzerschnittstelle (11) derart bereitgestellt und/oder angepasst wird, dass diejenigen Fahrzeuginformationen und/oder Fernbedienungsoptionen, die der ermittelten Aufenthaltszone (2, 3, 4) zugeordnet sind, angezeigt werden, vorzugsweise hervorgehoben anzeigt werden, und Fernbedienungsoptionen, die der ermittelten Aufenthaltszone (2, 3, 4) nicht zugeordnet sind, unterbunden werden.

4. Verfahren nach Anspruch 2 oder 3, wobei:
das Kraftfahrzeug (1) ein Nutzfahrzeug mit einem Fahrerhaus (5) ist; und
die mehreren Aufenthaltszonen unterschiedliche Teilbereiche (4a, 4b) innerhalb des Fahrerhauses (5) umfassen.

5. Verfahren nach Anspruch 4, wobei:
das Kraftfahrzeug (1) ein teilautomatisiertes Kraftfahrzeug ist, bei dem in bestimmten Situationen eine Übernahme der Fahraufgabe durch einen Fahrer erforderlich ist; und
falls erkannt wird, dass eine Übernahme der Fahraufgabe durch einen Fahrer bevorsteht, die Benutzerschnittstelle (11), abhängig von der ermittelten Aufenthaltszone, eine Aufforderung zur Übernahme der Fahraufgabe anzeigt.

6. Verfahren nach Anspruch 5, wobei abhängig von der ermittelten Aufenthaltszone ein Zeitpunkt und/oder ein angezeigter Inhalt der Aufforderung zur Übernahme der Fahraufgabe angepasst wird.

7. Verfahren nach einem der vorherigen Ansprüche, wobei:
die Benutzerschnittstelle (11) eine Bedienmöglichkeit anzeigt, um das Kraftfahrzeug von einem Parkzustand in einen autonomen Fahrzustand zu versetzen, falls abhängig von der ermittelten Position bestimmt wird, dass die tragbare Bedienvorrichtung, von einem Fernbereich (2) des Kraftfahrzeugs (1) kommend, einen Nahbereich (2) des Kraftfahrzeugs (1) erreicht und/oder erreicht hat.

8. Verfahren nach einem der vorherigen Ansprüche, wobei:
das Kraftfahrzeug (1) einen verriegelbaren Laderaum (6), vorzugsweise für Transportgüter, umfasst; und
die Benutzerschnittstelle (11) eine Freigabe zur Entladung des Laderaums und/oder eine Bedienmöglichkeit, um den Laderaum (6) zu entriegeln, anzeigt, nachdem das Kraftfahrzeug selbstfahrend zu einer Entladestelle navigiert ist und abhängig von der ermittelten Position bestimmt wurde, dass sich die Bedienvorrichtung in einem Nahbereich (3) des Kraftfahrzeugs (1) befindet.

9. Verfahren nach einem der vorherigen Ansprüche, wobei:
eine Quer- und Längsführung des Kraftfahrzeugs mittels der Bedienvorrichtung (10) fernsteuerbar ist; und
die Benutzerschnittstelle (11) eine Fernbedienungsoption zur Fernsteuerung der Quer- und Längsführung des Kraftfahrzeugs anzeigt und/oder freischaltet, solange abhängig von der ermittelten Position bestimmt wird, dass sich die Bedienvorrichtung in einem Nahbereich (3) des Kraftfahrzeugs (1) befindet.

10. Verfahren nach Anspruch 9, wobei:
die Benutzerschnittstelle (11) so angepasst wird, dass eine Fernsteuerung
a) eines Vorwärtsfahrbetriebs des Kraftfahrzeugs nur ermöglicht wird, wenn sich die Bedienvorrichtung in einem vorderen oder vorderen seitlichen Nahbereich (3a) des Kraftfahrzeugs (1) befindet, und/oder
b) eines Rückwärtsfahrbetriebs des Kraftfahrzeugs nur ermöglicht wird, wenn sich die Bedienvorrichtung in einem hinteren oder hinteren seitlichen Nahbereich (3b) des Kraftfahrzeugs (1) befindet.

11. Verfahren nach einem der vorherigen Ansprüche, wobei:
das Kraftfahrzeug (1) ein elektrisch angetriebenes Kraftfahrzeug ist, aufweisend eine Ladesteckdose zum externen Aufladen eines Traktionsenergiespeichers; und
die Benutzerschnittstelle (11) Ladeinformationen einer Ladesäule anzeigt, falls das Kraftfahrzeug zum Laden an einer Ladesäule hält und anhand der ermittelten Position der Bedienvorrichtung ermittelt wird, dass die Bedienvorrichtung sich in einem vorbestimmten Nahbereich zur Ladesteckdose des Kraftfahrzeugs befindet.

12. Verfahren nach einem der vorherigen Ansprüche, wobei:
die Position der tragbaren Bedienvorrichtung (10) relativ zum Kraftfahrzeug (1) unter Verwendung von
a) einer Positionsermittlungseinrichtung (20) ermittelt wird, die mindestens eine dem Fahrzeug zugeordnete Sendeeinrichtung (21a, 21b, 21c), mittels der ein, vorzugsweise als Bluetooth-Signal ausgebildetes, Positionssignal (23) ausgebbar ist, umfasst und die mindestens eine der Bedienvorrichtung (10) zugeordnete Empfangseinrichtung (22) umfasst, mittels der das wenigstens eine Positionssignal (23) empfangbar ist, wobei die Bedienvorrichtung (10) eine Datenverarbeitungsrichtung (24) aufweist, mittels der aus dem mindestens einen empfangenen Positionssignal (23) die Position der Bedienvorrichtung (10) relativ zum Kraftfahrzeug (1) ermittelbar ist; und/oder
b) mindestens einem Bluetooth-Beacon (21a, 21b, 21c), vorzugsweise von mehreren, verteilt am Kraftfahrzeug (1) angeordneten Bluetooth-Beacons (21a, 21b, 21c), ermittelt wird.

13. Vorrichtung (100) zur Bereitstellung einer Benutzerschnittstelle zur Anzeige von Fahrzeuginformationen und/oder zur Fernbedienung von Fahrzeugfunktionen eines autonom oder teilautonom fahrenden Kraftfahrzeugs (1), wobei die Vorrichtung (100) dazu ausgebildet ist:
eine Position einer tragbaren Bedienvorrichtung (10) relativ zum Kraftfahrzeug (1) zu ermitteln; und
abhängig von der ermittelten Position eine Benutzerschnittstelle (11) zur Anzeige von Fahrzeuginformationen und/oder zur Fernbedienung von Fahrzeugfunktionen auf der Bedienvorrichtung (10) bereitzustellen.

14. Vorrichtung (100) nach Anspruch 13, wobei die Vorrichtung (100):
a) als Applikationsprogramm, sog. App, zur Ausführung auf der tragbaren Bedienvorrichtung (10), vorzugsweise einem Smartphone und/oder Tabletcomputer, ausgebildet ist; und
b) signalübertragend mit einer Positionsermittlungseinrichtung (20) verbunden ist, mittels der die Position der Bedienvorrichtung (10) relativ zum Fahrzeug (1) ermittelbar ist; und
c) dazu ausgebildet ist, auf einem Bildschirm (12) der Bedienvorrichtung (10) die Benutzerschnittstelle (11) anzuzeigen.

15. Computerprogramm, umfassend Befehle, die bei der Ausführung des Programms durch einen Computer diesen veranlassen, das Verfahren nach einem der Ansprüche 1 bis 12 auszuführen.
